# FASCICULE DE BREVET EUROPEEN

(11) **EP 1 163 646 B1**
(45) Date de publication et mention de la délivrance du brevet: **06.11.2002**
(21) Numéro de dépôt: 00911013.1
(22) Date de dépôt: 21.03.2000
(51) Int. Cl.: G07F 7/08

(54) **SYSTEME ET PROCEDE DE GESTION DE TRANSACTION DANS UN SITE MOBILE, ET EQUIPEMENTS MIS EN OEUVRE DANS CE SYSTEME**
SYSTEM UND VERFAHREN ZUR TRANSAKTIONSVERWALTUNG IN EINEM FORTBEWGUNGSMITTEL UND VORRICHTUNG DAFÜR
SYSTEM AND METHOD FOR MANAGING A TRANSACTION IN A MOBILE SITE, AND EQUIPMENT USED IN SAID SYSTEM

(30) Priorité: 23.03.1999 FR 9903561; 24.09.1999 FR 9911982
(43) Date de publication de la demande: 19.12.2001
(73) Titulaire: Virgile, 92800 Puteaux (FR)
(72) Inventeur: VAZ, Luis, Filipe, F-78120 Rambouillet (FR)
(74) Mandataire: Pontet, Bernard
(86) Numéro de dépôt international: FR0000699
(87) Numéro de publication internationale: WO00057369

(56) Documents cités:
- WO-A-96/13814
- WO-A-97/41499

## Description

La présente invention concerne un système de gestion de transaction dans un site mobile. Elle vise également le procédé de gestion de transaction mis en oeuvre dans ce système, ainsi que des équipements employés dans ce système.

Par site mobile, on entend ici tout engin ou structure mobile pouvant accueillir des personnes, par exemple des véhicules, des avions de ligne ou d'affaire et plus généralement tout aéronef, des engins de transport terrestre tels que des trains ou des autocars, ou des engins de transport maritime tels que des navires de ligne ou de croisière. Sont également concernés les commerçants non sédentaires et les professions libérales dans leurs activités extérieures.

Par transaction, on entend toute opération d'achat de biens, - par exemple des objets de consommation, des articles hors taxes -, ou de services, - par exemple des visualisations de films, des accès à des services sur Internet ou des réservation de services -.

Actuellement, de nombreux véhicules utilisés comme taxis, voitures de place et généralement pour le transport payant de personnes, sont équipés d'un terminal de paiement électronique prévu pour recevoir des cartes de paiement à puce ou à piste magnétique. Ces terminaux de paiement électronique sont conçus pour traiter toutes opérations de paiement dont le montant est inférieur à une valeur maximale prédéterminée, et sont pourvus de logiciels adaptés à chaque organisme émetteur de moyens de paiement électronique acceptés sur ce terminal de paiement.

En mode fixe, un terminal de paiement électronique est couplé à un socle qui est disposé à demeure et est relié d'une part à une source d'alimentation électrique et d'autre part à une ligne téléphonique. Ce socle assure notamment des fonction de recharge électrique et de communication avec un centre de télécollecte.

En mode portable, par exemple à l'intérieur d'un véhicule, le terminal de paiement électronique, accumule toutes les informations relatives aux transactions effectuées dans la journée. Lorsque le terminal de paiement électronique est replacé sur son socle, les informations accumulées sont transmises, via des moyens de communication électronique équipant le socle, au centre de télécollecte qui, en retour, transmet au terminal de paiement électronique des informations relatives aux cartes bloquées ou volées dans la journée.

Les systèmes actuels de paiement électronique sont conçus de telle sorte que lorsque le montant d'une transaction dépasse un plafond prédéterminé, par exemple 600 Francs Français (91,47 Euros), le terminal de paiement électronique sur lequel cette transaction est effectuée demande alors une autorisation à un centre d'appel distant. Cette autorisation ne peut être obtenue qu'en posant le terminal de paiement électronique sur son socle afin d'initier une communication avec le centre d'appel distant habilité à délivrer cette autorisation.

Par ailleurs, il est à noter que pour les cartes de paiement d'origine étrangère, une demande d'autorisation est la plupart du temps requise pour toute transaction.

Or, cette contrainte constitue un réel inconvénient pour les utilisateurs mobiles de terminaux de paiement électronique, au nombre desquels les chauffeurs de taxi, les représentants de commerce, vendeurs ambulants ou sur les marchés, les conducteurs de voiture de place, et d'une manière générale, toute profession amenée à réaliser des transactions dans un contexte mobile ou extérieur.

Pour ces utilisateurs, lorsqu'ils sont amenés à effectuer des transactions d'un montant dépassant le plafond de transaction sans autorisation, la seule possibilité qui leur est offerte face à un client souhaitant ou ne pouvant payer que par carte de paiement, est de réaliser une opération de forçage consistant à exécuter la transaction électronique sans autorisation et donc sans garantie, avec un risque non nul de perdre la totalité de cette transaction s'il s'avère a posteriori que la carte utilisée pour cette transaction avait été bloquée ou volée dans la journée.

A cela s'ajoute le problème de la prise en charge de cartes de paiement émises par des organismes étrangers et pour lesquelles il est difficile, voire dans certains cas, impossible, d'obtenir une autorisation de transaction.

On connaît déjà par le document ZA9705824 un système de gestion de transaction mobile conçu pour des véhicules de taxi équipés de terminaux de paiement électronique prévus pour traiter des transactions réalisées avec des cartes de transport prépayées, et couplés à des modules de communication mobile GSM. Les transactions effectuées à chaque insertion d'une carte prépayée sont stockées localement dans le terminal de paiement électronique puis transmises périodiquement par communication GSM à un site central qui crédite ensuite les sommes correspondant aux transactions effectuées dans un véhicule sur des comptes des organismes de transport gérant une flotte de taxis. Ce système de gestion de transaction mobile a pour principale fonction d'améliorer la sécurité des personnes et des biens en réduisant les sommes d'argent transportées dans les véhicules. Mais un tel système n'offre pas une solution acceptable à la question de la garantie des transactions d'un montant élevé à laquelle sont fréquemment exposés les professionnels du transport de personnes sur de longues distances.

Par ailleurs, dans les avions de ligne et les navires, de nombreux achats d'articles hors taxes (« duty free ») sont effectués au moyen de cartes de paiement dans des conditions matérielles ne permettant pas un contrôle de validité ou d'authentification de ces cartes de paiement, pour des raisons d'impossibilité d'accès à des systèmes centraux distants, l'utilisation de moyens mécaniques d'édition de facturettes étant encore très répandue. Il en résulte un taux important de fraude pour ces transactions par utilisation de cartes périmées, volées ou truquées.

En outre, il existe une demande forte exprimée par les passagers, notamment en première classe et en classe « affaires » pour accéder, à l'intérieur des avions et de préférence depuis leur siège, à des services de toute nature et plus particulièrement à des services de communication autour d'Internet et à toute une variété de services qui pour certains sont déjà déterminés et pour la plupart sont encore à créer, tels que la réservation et la vente de billets. Il existe déjà sur des avions de ligne des services de téléphonie à bord accessibles à la place au moyen de cartes de paiement. Les systèmes de gestion de ces services de téléphonie mettent en oeuvre des lecteurs de la piste magnétique des cartes de paiement mais aucune authentification et a fortiori aucune demande d'autorisation n'est en pratique réalisée, ce qui constitue une limite importante pour le développement de ces services.

Le document WO-A-9745B14 décrit un procédé pour obtenir une autorisation préalable de stationnement pour une automobile dans un parking. Cette autorisation est demandée à distance auprès d'un fournisseur du stationnement. Il est cependant à noter que lors du retrait de la voiture par son propriétaire, un nouveau contact distant doit être établi avec le fournisseur pour finaliser la transaction de fourniture du stationnement. Dans certains cas ce nouveau contact avec le fournisseur peut être difficile, voire impossible, et souvent long. Un client pressé, par exemple dans un taxi qui utilise ce procédé, ressentira ce délai comme une mauvaise qualité de la prestation.

Le but de l'invention est de remédier à ces inconvénients en proposant un système de gestion de transaction dans un site mobile, qui permette un niveau de sécurité et de garantie aussi élevé que celui que l'on peut attendre d'un système de gestion de transaction fixe bénéficient d'une liaison téléphonique permanente.

On atteint les objectifs précités avec un système de gestion de transaction selon la revendication 1 comprenant dans un site mobile :
- des moyens de paiement électronique prévus pour recevoir une carte de paiement, et
- des moyens de communication mobile reliés à ces moyens de paiement électronique.

Suivant l'invention, les moyens de paiement électronique et les moyens de communication mobile coopèrent pour procurer:
- avant et/ou pendant la réalisation de ladite prestation.
   - des moyens pour traiter une carte de paiement présentée par un porteur client de la prestation,
   - des moyens pour élaborer et pour émettre vers un site central une demande d'autorisation de réalisation de ladite transaction, et
   - Des moyens pour recevoir dudit site central en réponse à cette demande, des données d'autorisation préalable,
- après réalisation de ladite prestation,
   - des moyens pour exécuter localement la transaction de règlement, à partir d'un coût effectif de ladite prestation calculé localement et des données d'autorisation préalable, et
   - des moyens pour transmettre au site central des données relatives à des transactions réalisées localement.

Ainsi, avec le système selon l'invention, la durée d'exécution de la prestation, par exemple une course de taxi, est mise à profit pour réaliser un échange d'informations entre le site mobile et le site central. Lorsque la prestation est entièrement exécutée, il n'est alors plus nécessaire de faire attendre le client dans l'attente d'une autorisation en provenance du site central. En effet, la transaction définitive est traitée localement sur la base des données d'autorisation transmises préalablement.

Il est aisé d'imaginer les gains de temps considérables que l'utilisation du système de gestion de transaction mobile va apporter pour les clients pressés, arrivant par exemple à un aéroport ou à un rendez-vous d'affaire et devant régler une somme importante pour des courses de longue distance. En outre, les opérateurs, chauffeurs de taxi ou conducteurs de véhicule de place, pourront bénéficier d'une garantie de paiement qui jusqu'à présent était rarement envisageable pour le règlement de fortes sommes par carte de paiement. Par ailleurs, ce système permet l'édition définitive d'un reçu de paiement valant facture.

De préférence, les moyens pour exécuter localement la transaction sont commandés en réponse à une acquisition locale d'une commande de confirmation de transaction émis par le porteur de la carte de paiement. Par cette commande de confirmation, le client porteur de la carte accepte le montant définitif de la transaction.

Par ailleurs, les moyens de paiement électronique et les moyens de communication mobile peuvent avantageusement coopérer pour recevoir en outre du site central des informations relatives au statut de la carte de paiement proposée pour cette transaction.

Les réponses et les éventuelles informations relatives au statut des cartes de paiement sont de préférence transmises sous la forme de messages SMS.

Lorsque le système de gestion de transaction selon l'invention est mis en oeuvre dans un véhicule, on peut avantageusement prévoir qu'il soit relié à un système de navigation utilisant notamment la technologie GPS et coopère avec ce système de navigation pour fournir des informations relatives à la position effective du véhicule, en relation avec un statut particulier d'une carte de paiement proposée pour le règlement d'une transaction.

Le système de gestion de transaction mobile selon l'invention est alors de préférence agencé pour transmettre, en réponse à la réception d'une information de carte volée, à une entité mobile, notamment une patrouille de police, de préférence la plus proche du véhicule, un message d'alerte approprié et des informations relatives à la position de ce véhicule.

Il est à noter que les informations de position du véhicule peuvent également être obtenues par des techniques connues de positionnement d'un émetteur-récepteur. On peut également prévoir des moyens d'enregistrement sonore dans une cassette dont le contenu est effacé périodiquement.

Ce système peut en outre être relié à des moyens de prise d'images vidéo disposés au sein du site mobile, à des moyens pour fournir sur demande des programmes audiovisuels, à des moyens pour identifier un porteur d'une carte de paiement électronique, ou encore à un micro-ordinateur portable, et il est agencé pour transmettre à ce micro-ordinateur des données, en particulier des données comptables relatives aux transactions effectuées au sein dudit système. Dans un autre domaine d'application particulièrement avantageux, un système de gestion de transaction selon un mode de réalisation particulier de l'invention est implanté dans des sites mobiles tels que des aéronefs dans lesquels des services variés sont proposés à des passagers. Un tel système de gestion de transaction est caractérisé en ce qu'il comprend:
- au sein du site mobile :
   - un ensemble de terminaux d'accès à des services, comprenant des équipements de lecture de carte de paiement et étant connectés à des équipements de fourniture de services,
   - une unité locale de contrôle et de traitement auxquels sont connectés les terminaux d'accès,
   - une unité locale de communication coopérant avec l'unité locale de contrôle et de traitement pour communiquer, via un ou plusieurs réseaux de communication, avec un ou plusieurs sites distants de gestion de transaction, notamment un site bancaire,
- au sein d'un site distant de gestion de transaction,
   - des moyens de communication pour communiquer via un ou plusieurs réseaux de communication avec des sites mobiles ,
   - une unité distante de contrôle et de traitement programmée pour traiter des demandes d'authentification et d'autorisation de transaction émanant d'un site mobile.

Les communications entre les sites mobiles et les sites distants de gestion de transaction sont de préférence réalisées au moyen d'un réseau de satellites de communication, permettant ainsi une continuité de liaison quelle que soit la position relative du site mobile par rapport à un site distant de gestion. Il est à noter qu'une exploitation commerciale du système selon l'invention contribuera à générer du trafic sur les réseaux de communication par satellite et à renforcer la viabilité et la rentabilité des sociétés exploitant ces réseaux.

Dans un mode particulier de mise en oeuvre du système selon l'invention, les différents services disponibles dans un site mobile sont facturés aux passagers utilisateurs directement par l'exploitant de ce site mobile qui règle ensuite chacun des fournisseurs de service concernés. Ainsi, c'est la compagnie aérienne exploitant une flotte d'avions équipée du système selon l'invention qui gère l'ensemble des transactions réalisées à bord de chacun de ses avions. Il en résulte une grande simplification des opérations de gestion et une contribution significative à la fiabilité et à la sécurité des transactions. Par ailleurs, une seule opération de demande d'autorisation suffit pour accéder à une pluralité de services avec une carte de paiement.

Suivant un autre aspect de l'invention, il est proposé un procédé selon la revendication 16 pour réaliser depuis un site mobile une transaction financière en règlement d'une prestation, mis en oeuvre dans un système selon l'invention.

Ce procédé est caractérisé en ce qu'il comprend les étapes suivantes:
avant et/ou pendant l'exécution de ladite prestation,
- une lecture de données contenues dans une mémoire d'une carte de paiement proposée pour le règlement de cette prestation,
- une acquisition d'informations préalables relatives à ladite prestation,
- un traitement des données lues et des informations de prestation acquises pour élaborer une demande d'autorisation,
- une émission de cette demande d'autorisation depuis le site mobile à destination d'un site central, selon un protocole de communication mobile,
- une réception de données d'autorisation préalable émises depuis le site central selon ledit protocole de communication mobile,
après exécution de ladite prestation,
- un calcul local du montant effectif du règlement de ladite prestation, et
- une émission vers le site central de données finales de transaction incluant le montant effectif du règlement et les données d'autorisation provisoire.

Ce procédé peut en outre comprendre une étape de réception sur le site mobile d'informations relatives au statut de la carte de paiement proposée pour le règlement de la transaction, ainsi qu'une étape de réception d'informations relatives à la position effective du site mobile et une étape de transmission combinée d'un message d'alerte en relation avec un statut particulier d'une carte de paiement et desdites informations de position du site mobile.

Lorsque le procédé de gestion de transaction selon un mode de réalisation particulier de l'invention est mis en oeuvre dans un site mobile tel qu'un aéronef dans lequel des services variés sont proposés aux passagers, ce procédé comprend :
- au sein du site mobile :
   - des séquences de collecte de demandes d'autorisation de transaction résultant de la présentation de cartes de paiement,
   - des séquences de transmission des demandes d'autorisation collectées vers un site distant de gestion de transaction, via un ou plusieurs réseaux de communication,
- sur le site distant de gestion de transaction :
   - une réception et un traitement de demandes d'autorisation de transaction provenant de divers sites mobiles,
   - une élaboration de données d'autorisation de transaction, et une transmission de ces données vers les sites mobiles concernés pour y être traitées.

Les données d'autorisation de transaction reçues par un site mobile à la suite de la transmission d'une demande d'autorisation comprennent par exemple une autorisation d'engagement de dépense jusqu'à un plafond prédéterminé et des données d'authentification. Elles sont de préférence reçues avant la fourniture effective des services commandées.

Les transmissions de demandes d'autorisation depuis un site mobile peuvent être groupées localement avant d'être réalisées sous la forme de paquets. Un routage optimal des paquets de données à destination de sites distants de gestion de transaction peut être géré soit localement soit depuis un site de routage connecté à un site distant de gestion de transaction.

Les services concernés par le système et le procédé selon l'invention et offerts à bord d'un site mobile, par exemple un avion de ligne, peuvent être de toute nature, notamment à titre d'exemple non limitatif :
- la visualisation de films à la demande,
- l'accès à des services payants sur Internet
- les communications téléphoniques
- des jeux et loteries
- des réservations et commandes de services : taxi, hôtels, restaurants, fleurs, cadeaux, voyages
- des achats de produits à bord : parfums, alcools, articles de luxe, alimentation, etc..

Le système de gestion de transaction mobile selon l'invention procure des avantages substantiels pour l'ensemble des parties. En particulier, dans son application aux règlements des courses de taxi, le conducteur du taxi peut en toute sécurité être réglé pour des courses de montant élevé. Pour les clients, c'est la garantie de pouvoir régler ces courses avec des moyens de paiement électronique, et pour les services financiers assurant les opérations bancaires pour le compte des taxis, l'assurance d'accroître significativement le nombre de transactions et de réduire les risques financiers liés aux cartes bloquées ou volées qui, avec le système de gestion de transaction selon l'invention, peuvent être mises hors d'usage plus rapidement, ce qui devrait contribuer à terme à une diminution des commissions prélevées sur les transactions.

Par ailleurs, le système de gestion de transaction mobile selon l'invention peut contribuer efficacement à la sécurité des biens et des personnes. En effet, outre la sécurité qu'il apporte, d'une part, en ne rendant plus nécessaire la détention au sein d'un véhicule de fortes sommes d'argent en espèces à la fin d'une journée, et d'autre part, en neutralisant les cartes bloquées ou volées, ce système peut permettre de fournir au conducteur du taxi ou plus généralement au prestataire de service, des informations sur le détenteur de la carte, par des messages synthétiques et discrets sans que celui-ci s'en rende compte. Ces informations peuvent être précieuses et conduire celui qui les reçoit à adopter un comportement approprié pour sa propre sécurité. De plus, le prestataire peut alerter des forces de police ou de sécurité via le système de gestion de transaction mobile, ce qui vient utilement renforcer les moyens d'alerte qui pourraient déjà exister dans un véhicule.

Un autre avantage du système de gestion de transaction mobile selon l'invention réside dans le fait qu'il peut permettre à un professionnel mobile de mettre à jour en temps réel sa comptabilité, si ce système de gestion de transaction mobile coopère avec un micro-ordinateur portable embarqué dans le véhicule. Ainsi, à chaque fois qu'une transaction est autorisée et validée, celle-ci est alors inscrite en recette dans le livre comptable informatisé du professionnel. Cette fonctionnalité pourrait d'ailleurs inciter des autorités de tutelle et des administrations à recommander une généralisation de l'utilisation de systèmes de transaction mobile selon l'invention afin notamment de lutter contre la fraude, notamment en matière fiscale.

Suivant encore un autre aspect de l'invention selon la revendication 27, il est proposé un équipement de gestion de transaction dans un site mobile, pour la mise en oeuvre du système de gestion de transaction selon l'invention, comprenant des moyens de paiement électronique prévus pour recevoir une carte de paiement, et des moyens de communication mobile reliés auxdits moyens de paiement électronique,
caractérisé en ce que les moyens de paiement électronique et les moyens de communication mobile procurent des moyens pour :
- avant et/ou pendant la réalisation de ladite prestation, traiter une carte de paiement présentée par un porteur client de la prestation, élaborer et pour émettre vers un site central une demande d'autorisation de réalisation de ladite transaction, et recevoir dudit site central en réponse à cette demande, des données d'autorisation préalable,
- après réalisation de ladite prestation, exécuter localement la transaction de règlement, à partir d'un coût effectif de ladite prestation calculé localement et des données d'autorisation préalable, et transmettre au site central des données relatives à des transactions réalisées localement.

D'autres particularités et avantages de l'invention apparaîtront encore dans la description ci-après. Aux dessins annexés donnés à titre d'exemples non limitatifs:
- la figure 1 est un schéma synoptique d'un système de gestion de transaction mobile selon l'invention; et
- la figure 2 illustre schématiquement un premier exemple de mise en oeuvre d'un système de gestion de transaction mobile selon l'invention au sein d'un véhicule doté d'un ensemble d'équipements;
- la figure 3 est un diagramme synoptique illustrant les étapes principales d'un second exemple de mise en oeuvre d'un système de gestion de transaction mobile selon l'invention ; et
- la figure 4 illustre un exemple de mise en oeuvre du procédé de gestion de transaction selon l'invention dans une compagnie aérienne.

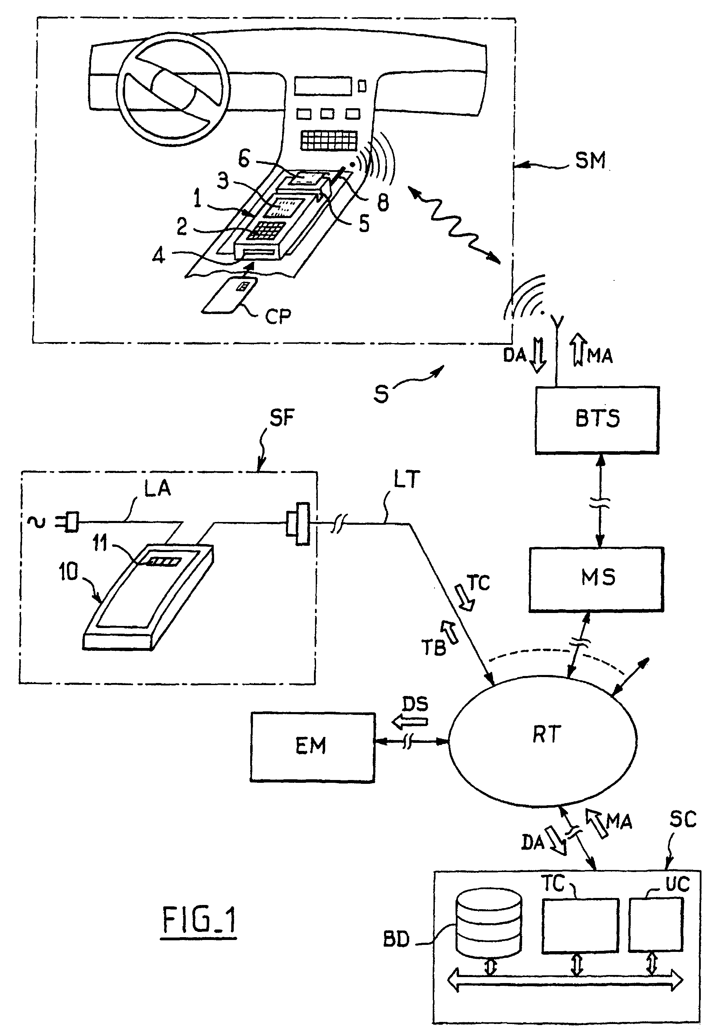

On va maintenant décrire, en référence à la figure 1, un exemple de réalisation d'un système de gestion de transaction mobile S selon l'invention, correspondant à une fabrication intégrée dans laquelle un module de communication mobile GSM est incorporé dans un terminal de paiement électronique.

Le système de gestion de transaction mobile S comprend un équipement mobile 1 combinant la fonction d'un terminal de paiement électronique TPE et d'un module de communication GSM. Cet équipement mobile 1 comporte un clavier 2, un dispositif d'affichage 3, un dispositif 4 de lecture de carte à puce CP, un dispositif de lecture de carte à piste magnétique 5, une unité d'impression 6 et une antenne de communication 8. L'équipement mobile 1 est placé dans un site mobile SM tel qu'un véhicule et bénéficie généralement d'une alimentation électrique locale à partir du système d'alimentation électrique du véhicule.

L'équipement mobile 1 est programmé pour communiquer avec un site central SC via un réseau de communication GSM à travers une station de base BTS, une station maître MS et un réseau de télécommunication RT. Le site central SC inclut au moins une unité de contrôle et de traitement UC, une unité de télécollecte TC et une base de données BD. L'équipement mobile 1 peut être également programmé pour communiquer avec une entité mobile EM telle qu'une patrouille de police, notamment pour lui fournir des informations DS sur la nature d'un incident justifiant une intervention et sur la position effective du véhicule fournie par le système de navigation GPS. Le système de gestion de transaction mobile selon l'invention peut d'ailleurs être agencé pour transmettre en double appel des messages d'alerte à la fois au site mobile SM et à une patrouille de police.

L'équipement mobile 1, lorsqu'il n'est pas utilisé dans le site mobile SM, est placé sur un socle 10 dans un site fixe SF, ce socle 10 étant prévu, d'une part, pour assurer le chargement des batteries de l'équipement mobile 1 via un câble d'alimentation électrique LA et, d'autre part, pour effectuer, via une ligne de communication LT le transfert différé des données TC éventuellement accumulées dans le module de paiement électrique et recevoir du site central SC des données TC relatives aux cartes bloquées ou volées au cours de la journée.

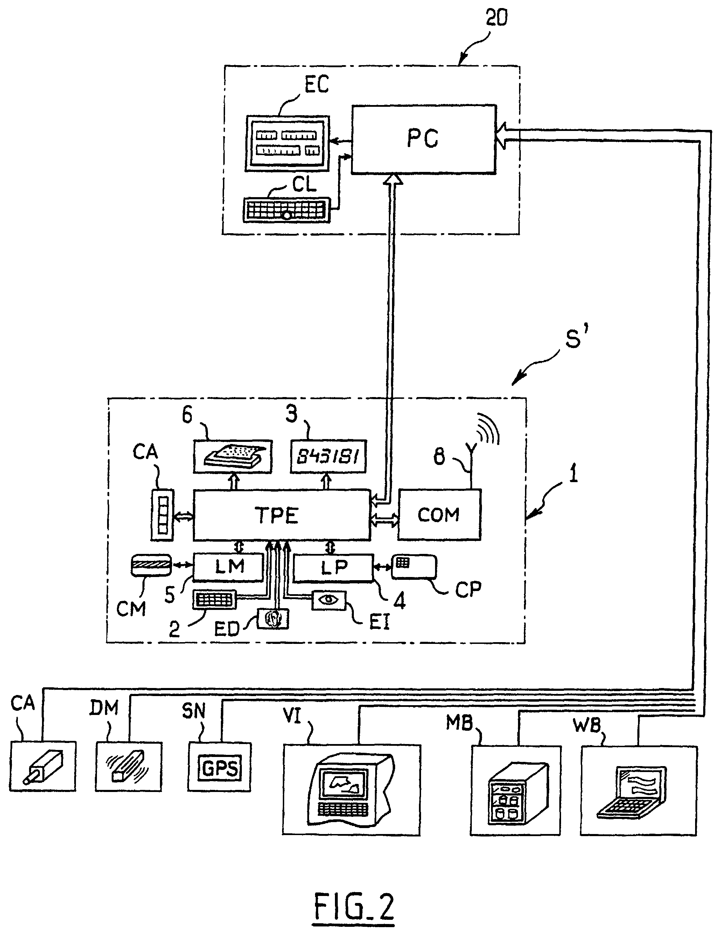

Le concept de transaction mobile peut être appliqué pour réaliser un système de gestion de transaction mobile capable de gérer et de facturer tout un ensemble de prestations au sein d'un véhicule doté d'équipements électroniques, et de fournir les services d'un bureau mobile, comme l'illustre la figure 2.

Ainsi, le système de gestion de transaction mobile S' comprend un équipement mobile 1 tel que décrit précédemment, qui est relié à un micro-ordinateur ou microcalculateur central 20 à la disposition du conducteur du véhicule, pourvu classiquement d'un écran EC et d'un clavier CL. Ce micro-ordinateur 20 est connecté à un ensemble d'équipements périphériques installés à l'intérieur du véhicule, notamment une caméra vidéo miniature CA utilisée pour filmer un client en cas de problème de paiement ou de détention d'une carte bloquée ou volée, un détecteur de métaux DN utilisé à des fins de sécurité, un système SN de navigation GPS, un équipement audiovisuel VI installé par exemple dans l'arrière d'un appui-tête du véhicule, un mini-bar MB équipé d'un système de détection de prise d'articles, et un micro-ordinateur WB programmé pour un accès direct au Web. Les images vidéo produites par la caméra CA peuvent, en fonction des dispositions légales en vigueur dans les pays, être stockées localement et/ou transmises en temps réel ou en différé au site central SC via les moyens de communication du système de gestion de transaction mobile selon l'invention. En particulier, on peut envisager un stockage local de ces images qui ne soit accessible qu'en cas d'incident, par exemple sur requête de services de polices ou judiciaires. Cette opération de stockage d'images peut être enclenchée par exemple au moyen d'une touche à pied disposée sous le volant ou au moyen d'une touche ou d'un bouton de sécurité disposé sur le clavier de l'équipement mobile.

On peut également prévoir un équipement d'enregistrement sonore utilisable à des fins de sécurité.

La caméra CA, le détecteur de métaux DM et le système de navigation SN contribuent activement à la fonction de sécurité assurée par le système de gestion de transaction mobile selon l'invention, tandis que l'équipement vidéo VI, le mini-bar MB et l'ordinateur WB faisant fonction de terminal Web correspondent à des prestations de service payantes qui sont gérées et facturées directement par le système de gestion de transaction mobile selon l'invention.

L'équipement mobile 1 selon l'invention, qui est situé au coeur du système de gestion de transaction mobile S', comprend outre les composants externes déjà cités en référence à la figure 1, un module de paiement électronique TPE pourvu d'un connecteur d'alimentation électrique CA et connecté à un module de communication COM. Le module de paiement électronique peut être en outre pourvu de dispositifs d'identification tels qu'un dispositif d'examen d'iris EI ou un dispositif d'analyse d'empreinte digitale ED.

On va maintenant décrire un premier exemple de fonctionnement du système de gestion de transaction mobile selon l'invention, en même temps que les étapes du procédé de gestion de transaction mobile mis en oeuvre dans ce système. Ce premier exemple de mise en oeuvre correspond au cas où l'on souhaite réaliser une transaction contrôlée pour le règlement d'une prestation ou l'acquisition d'un bien, pratiquement en temps réel.

Le module de paiement électronique TPE est préalablement programmé pour communiquer avec le système distant faisant fonction de centre d'appel sur le site central SC et assurant un accès à un centre d'authentification et d'autorisation bancaire. Les communications entre le module de paiement électronique TPE et le site central SC via le module de communication GSM sont réalisées sous la forme de messages de type SMS.

Une transaction est initiée dans un véhicule SM comportant l'équipement de transaction mobile 1 selon l'invention, lorsqu'une carte de paiement, à mémoire ou à piste magnétique, est introduite soit dans l'unité 4 de lecture de carte à puce, soit dans l'unité 5 de lecture de piste magnétique.

En dessous d'un plafond de transaction prédéterminé, l'équipement de transaction mobile 1 selon l'invention opère classiquement: un contrôle de la transaction est réalisé localement avec en premier lieu un contrôle d'authentification du porteur de la carte de paiement par saisie d'un code confidentiel ou par identification physique au moyen de l'analyse d'une empreinte digitale ED ou un examen de l'iris du porteur EI, puis la transaction proprement dite est exécutée avec impression d'un ticket ou d'une fiche attestant de cette transaction.

Cette fiche peut alors être utilisée comme facture décrivant complètement les différents services qu'un client a utilisés pendant une course.

Au dessus du plafond de transaction qui peut être d'ailleurs programmé à une valeur nulle, l'équipement de transaction mobile 1 initie, après un contrôle local d'authentification requérant par exemple une saisie d'un code confidentiel ou toute autre technique disponible d'authentification, une demande d'autorisation DA au site central distant SC, à partie du module de communication mobile GSM via un ou plusieurs réseaux de communication et notamment via Internet.

Le système de gestion de transaction mobile selon l'invention peut bénéficier de nombreuses fonctionnalités complémentaires :
- accès au réseau Internet et à des messageries électroniques,
- règlement de nombreuses prestations de service offertes sur le site mobile,
- identification de passagers en relation avec la détection de cartes volées.

Le système de gestion de transaction mobile selon l'invention peut ainsi permettre de proposer aux clients d'un taxi ainsi équipé des services aussi divers que la visualisation de programmes de télévision à la demande ou de type "pay per view", l'accès à des services de communication via Internet, ou encore l'utilisation de jeux vidéo. En effet, l'ensemble des services payants utilisés par un consommateur à l'intérieur d'un véhicule peut être facturé et réglé par sa carte de paiement via le système de gestion de transaction mobile selon l'invention.

Il est à noter que le système et le procédé de gestion de transaction mobile selon l'invention peuvent tout à fait intégrer des concepts actuels ou futurs d'appareils de communication mobile à accès direct Internet.

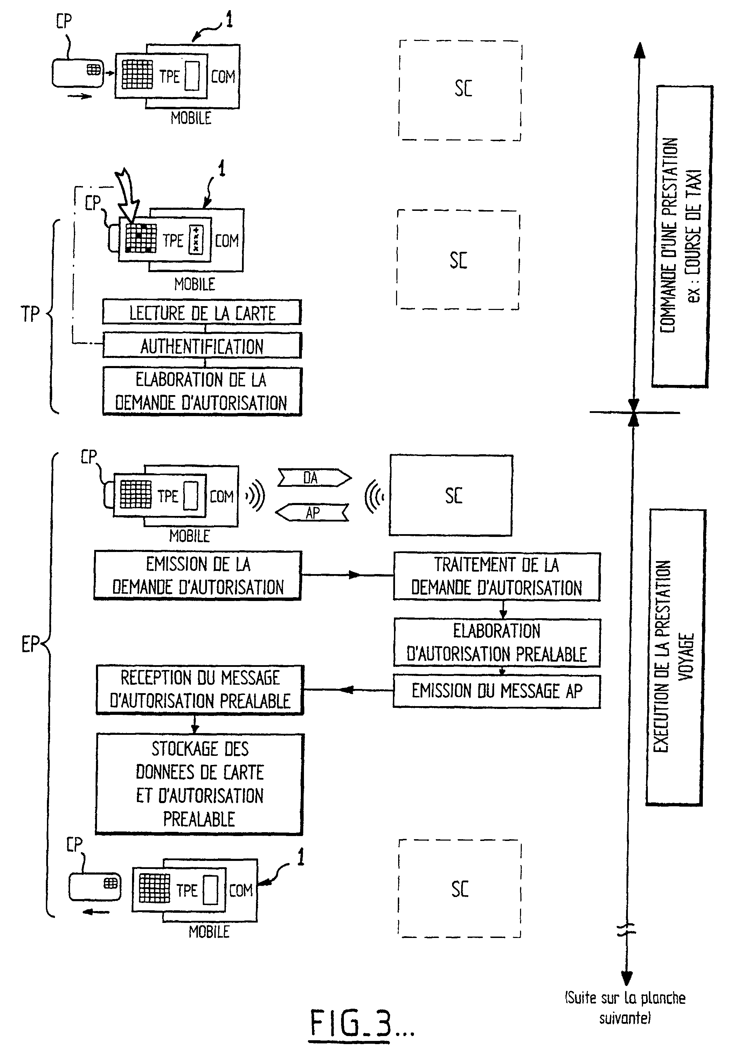

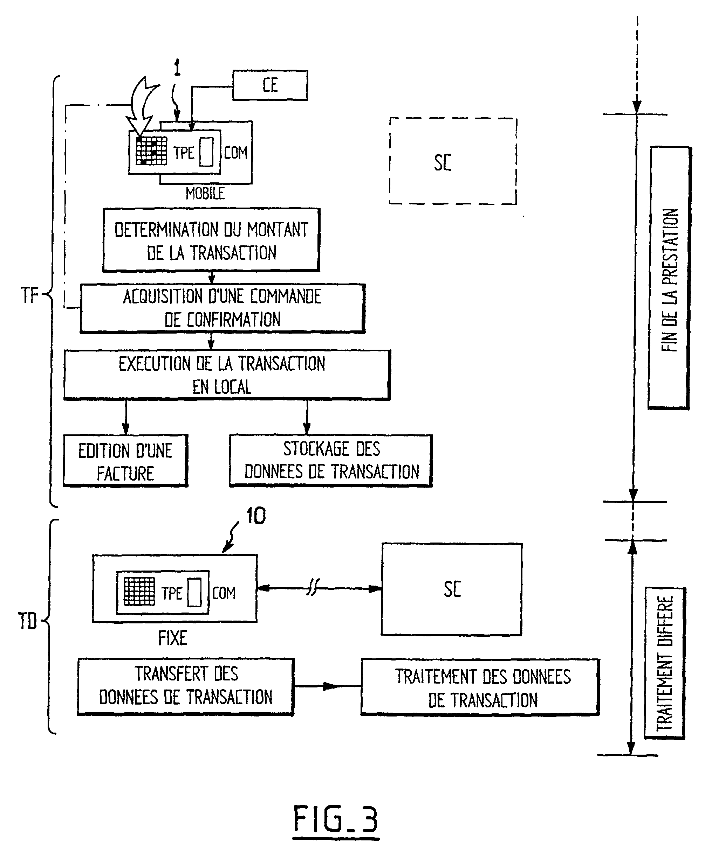

On va maintenant décrire, en référence à la figure 3, un second exemple de mise en oeuvre du système de gestion de transaction mobile selon l'invention, particulièrement avantageux dans une démarche d'optimisation des temps de traitement liés à une transaction pour le règlement d'une prestation de service telle qu'une course de taxi ou toute autre prestation dont le coût est intrinsèquement variable et n'est pas forcément connu avec précision lors de la commande de la prestation.

Lorsqu'un client, ayant exprimé le souhait de régler au moyen d'une carte de paiement CP, monte dans un véhicule taxi doté d'un équipement de transaction mobile 1 selon l'invention, il lui est proposé, avant le début de la course ou au début de celle-ci, d'insérer cette carte dans la fente de lecture du terminal de paiement électronique TPE couplé au terminal de communication mobile COM.

Débute alors une phase de traitement préalable TP au cours de laquelle des données utiles sont lues dans la puce de la carte ou sur la bande magnétique de celle-ci, une authentification en local est réalisée avec saisie d'un code confidentiel attaché à cette carte, et une demande d'autorisation est élaborée. Cette demande d'autorisation inclut des données liées à la carte de paiement proposée par le client, des données liées à l'opérateur de l'équipement de transaction 1, et des données liées au type de course envisagée (par exemple, indications tarifaires, estimation éventuelle du coût de la course, plafond de règlement ou limite maximale d'utilisation).

S'ensuit une phase d'échange préalable EP entre l'équipement de transaction mobile 1 et le site central SC via un réseau de communication mobile tel que le réseau GSM, au cours de laquelle l'équipement de transaction mobile 1 émet la demande d'autorisation. Cette demande est traitée par le site central SC qui élabore un message d'autorisation préalable en fonction de données bancaires liées à la carte de paiement proposée et accessibles par ce site central, et qui émet ce message d'autorisation préalable à destination de l'équipement de transaction mobile 1 concerné. Après réception de ce message d'autorisation, une étape de stockage de données liées à la carte de paiement CP et des données d'autorisation préalable est réalisée au niveau de l'équipement de transaction mobile 1, et le client est invité à retirer sa carte de paiement de l'équipement de transaction mobile 1.

Dans le cas où le message d'autorisation reçu du site central SC notifie un refus d'autorisation préalable, l'opérateur, i.e. le chauffeur de taxi, en est informé, de préférence sous forme codée sur un écran de contrôle ou sur l'écran de l'équipement de transaction mobile 1, et prévient le client que la carte de paiement proposée ne pourra être utilisée pour le règlement de la course.

Il est à noter que les phases de traitement préalable TP et d'échange préalable EP sont de préférence entreprises dès le début de la course, afin de minimiser pour l'opérateur du taxi les risques d'engagement en cas de refus de la carte de paiement et absence d'autre moyen de paiement.

Dans le cas où une autorisation préalable a été émise par le site central, l'opération de transaction est différée jusqu'à la fin de l'exécution de la prestation, en l'occurrence jusqu'à l'arrivée à la destination finale de la course. Le chauffeur du taxi arrête alors le compteur électronique CE équipant son véhicule. Le montant final de la transaction pour le règlement de la course est alors déterminé et transmis par le compteur électronique CE à l'équipement de transaction mobile 1, au cours d'une phase de transaction finale TF.

Un traitement local peut alors être effectué pour vérifier si ce montant final entre bien dans le cadre de l'autorisation préalable accordée par le site central. Si c'est le cas, le client est alors simplement invité à confirmer le règlement de la course selon le mode opératoire en cours, par exemple en appuyant sur une touche de validation du clavier de l'équipement de transaction mobile ou encore en frappant à nouveau le code confidentiel attaché à sa carte de paiement. Un reçu ou un document de facture est alors édité et imprimé pour être remis au client, tandis que des données de facturation sont stockées dans une mémoire appropriée de l'équipement de transaction mobile 1.

Dans le cas où le montant final de la transaction dépasserait significativement le plafond de l'autorisation préalable émise par le site central SC, un nouvel appel au site central peut alors être effectué pour demander une autorisation de dépassement du plafond initial.

On comprendra que la fourniture par l'opérateur d'une estimation préalable du coût prévisible de la course revêt une importance particulière pour éviter tout risque de perte de garantie pour la transaction. On peut d'ailleurs prévoir que cette estimation soit calculée automatiquement par un ordinateur de bord ou un navigateur électronique, après saisie par l'opérateur du point de départ et du point de destination et des paramètres caractéristiques de cette course.

Le transfert des informations relatives aux transactions réalisées peut être effectué automatiquement depuis le site mobile, soit en temps réel à l'occasion de chaque transaction, soit en temps différé à des heures prédéterminées de la journée, soit encore lorsqu'une somme cumulée prédéterminée a été atteinte.

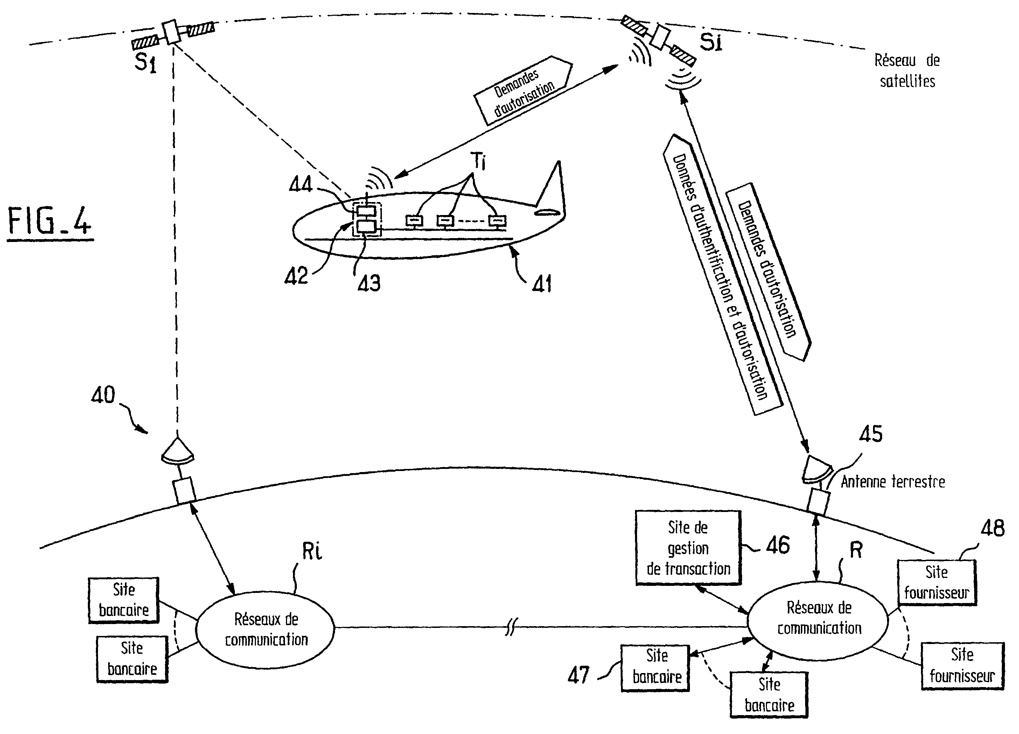

Dans une autre application particulière intéressante de la présente invention, illustrée schématiquement par la figure 4, le système de gestion de transaction 40 est mis en oeuvre dans une flotte d'avions d'une compagnie aérienne. Chaque avion 41 est équipé d'un ensemble de terminaux de paiement Ti disposés par exemple au niveau de chaque fauteuil et/ou en des endroits prédéterminés de la cabine. Ces terminaux de paiement, qui peuvent être associés à des terminaux de commande de service (non représentés), sont tous reliés à un équipement de gestion de transaction 42 centralisant l'ensemble des transactions commerciales réalisées dans l'avion et comprenant au moins une unité centrale de traitement 43 et une unité de communication 44 conçue pour communiquer via un réseau de satellites de communication S1, ...Si, des antennes terrestres 45 et des réseaux de communication terrestres R, ...Ri, avec un site de gestion de transaction 46 prévu pour mettre en oeuvre le procédé de gestion de transaction selon l'invention. Ce site de gestion de transaction peut, soit être unique avec centralisation de l'ensemble des demandes d'autorisation de transaction émises depuis les avions de la compagnie aérienne, soit faire partie d'un réseau de sites de gestion de transaction répartis sur la surface du globe.

Le site de gestion de transaction 46 est relié via des réseaux de communication, d'une part, à des sites fournisseurs de service 48 avec lesquels la compagnie aérienne a passé des accords pour la fourniture de services à bord de ses avions, et d'autre part, à des sites bancaires 47 qui gèrent les cartes de paiement présentées par les passagers des avions.

L'équipement de gestion de transaction 42 installé à bord de l'avion collecte l'ensemble des demandes d'autorisation émises par les terminaux de paiement Ti utilisés par les passagers. Pour un passager donné, c'est lors de la première présentation de sa carte de paiement qu'une demande d'autorisation est émise par le terminal de paiement utilisé par ce passager, cette demande étant acquise pour la durée du vol dans la limite d'un plafond de dépenses déterminé par le site central distant de gestion de transaction. L'équipement de gestion de transaction 42 traite localement les demandes d'autorisation et les transmet, soit en temps réel, soit en différé par paquets, au site distant de gestion de transaction le plus proche ou le plus facilement accessible via les réseaux de communications disponibles au moment de l'opération de transmission. La continuité de communication peut être assurée par un accord conclu entre la compagnie aérienne utilisatrice du système de gestion de transaction selon l'invention avec une compagnie opératrice d'un réseau de satellites de communication.

Les demandes d'autorisation émises depuis l'avion 41 par l'équipement de gestion de transaction 42 sont reçues et traitées par le site distant de gestion de transaction 45, qui après avoir interrogé les sites bancaires concernés et si nécessaire les sites fournisseurs des services demandés, élabore et émet en retour des données d'authentification et d'autorisation à destination de l'équipement de gestion de transaction 42. Celui-ci traite ces données et fournit à l'ensemble des terminaux de paiement concernés les données permettant d'autoriser ou non les transactions demandées. Par ailleurs, les données de transaction sont traitées localement et stockées dans l'équipement de gestion de transaction 42 pour chaque passager utilisateur du système.

Dans un mode particulier de gestion donné à titre d'exemple non limitatif, les données de transaction accumulées au cours du vol sont ensuite transmises à l'issue de ce vol à un site distant de gestion de transaction qui transmet alors aux banques des différents passagers utilisateurs les ordres de débit de leurs comptes-cartes. C'est la compagnie aérienne qui détermine les prix des prestations proposées à bord et est directement réglée par chaque passager pour l'ensemble des prestations de service que ce passager a commandé au cours de son voyage. La compagnie aérienne paie alors chaque fournisseur de services pour l'ensemble des prestations délivrées par ce fournisseur de servies au cours d'un ou plusieurs vols ou sur une période de temps prédéterminée. La compagnie aérienne paie également les opérateurs des réseaux de communication et en particulier à l'opérateur du réseau de satellites de communication pour les dépenses de communication correspondant au trafic de communication généré par l'utilisation du procédé de gestion de transaction selon l'invention sur sa flotte d'avions.

Le système et le procédé de gestion de transaction mobile selon l'invention peut aussi trouver une application intéressante dans le domaine de l'accès à des services payants fournis à distance via des réseaux de communication par satellite, câble ou par voie hertzienne, lorsque l'accès à ces services requiert une demande d'accès préalable et un règlement par carte de paiement ou carte de crédit via une liaison de télécommunication. En effet, il est de plus en plus courant d'installer des décodeurs de chaînes de télévision offrant des accès payants dans des sites non équipés de liaison téléphonique fixe ou filaire, en particulier mais non limitativement dans des sites mobiles. On peut donc prévoir, dans le cadre de la présente invention, un équipement d'accès à des services payants via un réseau de communication ou de télédiffusion, tel qu'un décodeur de chaînes de télévision par satellite, câble, voie hertzienne ou Internet, incluant un système de gestion de transaction selon l'invention. On peut alors disposer du couplage de la fonction de communication mobile et de la fonction de paiement électronique procuré par le système de gestion de transaction selon l'invention. Un tel équipement d'accès à des services payants comprend ainsi, outre des moyens classiques de décodage et éventuellement de décryptage, des moyens de communication mobile coopérant avec des moyens de paiement électronique selon les caractéristiques d'un système de gestion de transaction selon l'invention.

Il est à noter qu'un tel équipement d'accès à des services payants incluant un système de gestion de transaction selon l'invention peut fort bien être installé dans un site mobile et en particulier un véhicule particulier ou collectif ou dans un taxi.

Bien sûr, l'invention n'est pas limitée aux exemples qui viennent d'être décrits et de nombreux aménagements peuvent être apportés à ces exemples sans sortir du cadre de l'invention. Ainsi, on peut utiliser des modules de communication GSM 900, 1800, 1900 (CDMA) ou encore des modules de communication par satellite. Par ailleurs, la présente invention n'est pas limitée aux seuls véhicules terrestres, mais peut également être mise en oeuvre dans des bateaux ou des aéronefs.

## Revendications

1. Système (S) pour réaliser dans un site mobile (SM) une transaction financière correspondant au règlement d'une prestation de service, comprenant dans ledit site mobile (SM):
- des moyens de paiement électronique (TPE) prévus pour recevoir une carte de paiement (CP, CM), et
- des moyens de communication mobile (COM) reliés auxdits moyens de paiement électronique (TPE),
**caractérisé en ce que** les moyens de paiement électronique (TPE) et les moyens de communication mobile (COM) coopèrent pour procurer:
- avant et/ou pendant la réalisation de ladite prestation,
- des moyens pour traiter une carte de paiement présentée par un porteur client de la prestation,
- des moyens pour élaborer et pour émettre vers un site central (SC) une demande d'autorisation (DA) de réalisation de ladite transaction, et
- Des moyens pour recevoir dudit site central (SC) en réponse à cette demande, des données d'autorisation préalable (DA),
- après réalisation de ladite prestation,
- des moyens pour exécuter localement la transaction de règlement, à partir d'un coût effectif de ladite prestation calculé localement et des données d'autorisation préalable, et
- des moyens pour transmettre au site central des données relatives à des transactions réalisées localement.

2. Système selon la revendication 1, **caractérisé en ce que** les moyens pour exécuter localement la transaction sont commandés en réponse à une acquisition locale d'une commande de confirmation de transaction émis par le porteur de la carte de paiement.

3. Système (S) selon l'une des revendications 1 ou 2, **caractérisé en ce que** les moyens de paiement électronique (TPE) et les moyens de communication mobile (COM) coopèrent pour recevoir en outre du site central (SC) des informations relatives au statut de la carte de paiement (CP, CM) proposée pour cette transaction.

4. Système (S) selon la revendication 3, **caractérisé en ce que** les demandes d'autorisation (DA), les réponses (MA) et les éventuelles informations relatives au statut des cartes de paiement (CP, CM) sont transmises sous la forme de messages SMS.

5. Système (S) selon l'une quelconque des revendications précédentes, mis en oeuvre dans un véhicule (SM), **caractérisé en ce qu'**il est relié à un système de navigation (SN) et coopère avec ledit système de navigation (SN) pour fournir des informations relatives à la position effective dudit véhicule (SM), en relation avec un statut particulier d'une carte de paiement (CP, CM) proposée pour le règlement d'une transaction.

6. Système (S) selon la revendication 5, **caractérisé en ce qu'**il est agencé pour transmettre, en réponse à la réception d'une information de carte volée, à une entité mobile (PS), notamment une patrouille de police, un message d'alerte (DS) approprié et des informations relatives à la position dudit véhicule (SM).

7. Système (S) selon l'une quelconque des revendications précédentes, **caractérisé en ce qu'**il est en outre relié à des moyens (CA) de prise d'images vidéo disposés au sein du site mobile (SM).

8. Système (S) selon l'une quelconque des revendications précédentes, **caractérisé en ce qu'**il est en outre relié à des moyens (VI) pour fournir sur demande des programmes audiovisuels.

9. Système (S) selon l'une quelconque des revendications précédentes, **caractérisé en ce qu'**il est en outre relié à des moyens (ED, EI) pour identifier un porteur d'une carte de paiement (CP, CM).

10. Système (S) selon l'une quelconque des revendications précédentes, **caractérisé en ce qu'**il est en outre relié à un micro-ordinateur ou microcalculateur (20).

11. Système (S) selon la revendication 10, caractérisé en qu'il est agencé pour transmettre au micro-ordinateur ou microcalculateur (20) des données, notamment des données comptables, relatives aux transactions effectuées au sein dudit système.

12. Système (S) selon l'une des revendications 10 ou 11, relié à un micro-ordinateur (20) pilotant au sein du site mobile (SM) une pluralité d'équipements périphériques comprenant des équipements à utilisation ou accès payant (VI, MB, WB), **caractérisé en ce qu'**il est en outre agencé pour gérer l'utilisation et la facturation de tout ou partie desdits équipements.

13. Système (40) de gestion de transaction selon l'une quelconque des revendications 1 à 4, mis en oeuvre dans un site mobile prévu pour recevoir des passagers, tel qu'un aéronef, un train ou-un bateau, **caractérisé en ce qu'**il comprend :
- au sein du site mobile ;
- un ensemble de terminaux d'accès à des services, comprenant des équipements de lecture de carte de paiement et étant connectés à des équipements de fourniture de services,
- une unité locale de contrôle et de traitement auxquels sont connectés les terminaux d'accès,
- une unité locale de communication coopérant avec l'unité locale de contrôle et de traitement pour communiquer, via un ou plusieurs réseaux de communication, avec un ou plusieurs sites distants de gestion de transaction, notamment un site bancaire,
- au sein d'un site distant de gestion de transaction,
- des moyens de communication pour communiquer via un ou plusieurs réseaux de communication avec des sites mobiles ,
- une unité distante de contrôle et de traitement programmée pour traiter des demandes d'authentification et d'autorisation de transaction émanant d'un site mobile.

14. Système (40) de gestion de transaction selon la revendication 13, **caractérisé en ce que** les communications entre les sites mobiles et les sites distants de gestion de transaction sont réalisées au moyen d'un réseau de satellites de communication procurant une continuité de liaison quelle que soit la position relative du site mobile par rapport à un site distant de gestion.

15. Système de gestion de transaction selon l'une des revendications 13 ou 14, **caractérisé, en ce que** les différents services disponibles dans un site mobile sont facturés aux passagers utilisateurs directement par l'exploitant de ce site mobile.

16. Procédé pour réaliser une transaction financière en règlement d'une prestation, mis en oeuvre dans un système (S) selon l'une quelconque des revendications précédentes, comprenant les étapes suivantes :
avant et/ou pendant l'exécution de ladite prestation :
- une lecture de données contenues dans une mémoire d'une carte de paiement (CP,CM) proposée pour le règlement de cette prestation,
- une acquisition d'informations préalables relatives à ladite prestation,
- un traitement des données lues et des informations de prestation acquises pour élaborer une demande d'autorisation,
- une émission de cette demande d'autorisation (DA) depuis le site mobile (SM) à destination d'un site central (SC) selon un protocole de communication mobile (GSM),
- une réception de données d'autorisation préalable (MA) émise depuis le site central (SC) selon ledit protocole de communication mobile,
après exécution de ladite prestation :
- un calcul local du montant effectif de ladite prestation, et,
- une émission de données finales de transaction incluant le montant effectif du règlement et les données d'autorisation provisoire,
**caractérisé en ce qu'**il comprend en outre un traitement local d'un ordre de confirmation de la transaction émis par le porteur de la carte de paiement à l'issue de la transaction.

17. Procédé selon la revendication 16, **caractérisé en ce que** les données d'autorisation provisoire comprennent un plafond d'autorisation, et **en ce que** l'étape d'émission de données de validation de transaction est conditionnée par le résultat d'une étape de comparaison entre le montant effectif du règlement est inférieur ou égal audit plafond d'autorisation.

18. Procédé selon l'une des revendications 16 ou 17, **caractérisé en ce qu'**il comprend en outre un contrôle local d'identification du porteur de la carte de paiement (CP, CM), préalable à l'émission de la demande d'autorisation.

19. Procédé selon l'une des revendications 16 à 18, **caractérisé en ce qu'**il comprend en outre une étape de réception sur le site mobile (SM) d'informations relatives au statut de la carte de paiement (CP, CM) proposée pour le règlement de la transaction.

20. Procédé selon la revendication 19, **caractérisé en ce qu'**il comprend en outre une étape de réception d'informations relatives à la position effective du site mobile (SM) et une étape de transmission combinée d'un message d'alerte (DS) en relation avec un statut particulier d'une carte de paiement (CP, CM) et desdites informations de position du site mobile.

21. Procédé selon l'une quelconque des revendications 16 à 20, comprenant :
- au sein du site mobile :
- des séquences de collecte de demandes d'autorisation de transaction résultant de la présentation de cartes de paiement,
- des séquences de transmission des demandes d'autorisation collectées vers un site distant de gestion de transaction, via un ou plusieurs réseaux de communication,
- sur le site distant de gestion de transaction :
- une réception et un traitement de demandes d'autorisation de transaction provenant de divers sites mobiles,
- une élaboration de données d'autorisation de transaction, et une transmission de ces données vers les sites mobiles concernés pour y être traitées.

22. Procédé selon la revendication 21, **caractérisé en ce que** les données d'autorisation de transaction reçues par un site mobile à la suite de la transmission d'une demande d'autorisation comprennent une autorisation d'engagement de dépense jusqu'à un plafond prédéterminé et des données d'authentification.

23. Procédé selon l'une des revendications 21 ou 22, **caractérisé en ce que** les transmissions de demandes d'autorisation depuis un site mobile sont groupées localement avant d'être réalisées sous la forme de paquets.

24. Procédé selon la revendication 23, **caractérisé en ce qu'**il comprend en outre une gestion d'un routage optimal des paquets de données à destination de sites distants de gestion de transaction.

25. Procédé selon la revendication 24, **caractérisé en ce que** la gestion de routage est effectuée localement au sein du site mobile.

26. Procédé selon l'une des revendications 24 ou 25, **caractérisé en ce que** la gestion de routage est effectuée depuis un site de routage connecté à un site distant de gestion de transaction.

27. Equipement mobile de gestion de transaction dans un site mobile, pour la mise en oeuvre du système de gestion de transaction selon l'une quelconque des revendications 1 à 15, comprenant des moyens de paiement électronique (TPE) prévus pour recevoir une carte de paiement (CP, CM), et des moyens de communication mobile (COM) reliés auxdits moyens de paiement électronique (TPE),
**caractérisé en ce que** les moyens de paiement électronique (TPE) et les moyens de communication mobile (COM) coopèrent pour procurer :
- avant et/ou pendant la réalisation de ladite prestation,
- des moyens pour traiter une carte de paiement présentée par un porteur client de la prestation,
- des moyens pour élaborer et pour émettre vers un site central (SC) une demande d'autorisation (DA) de réalisation de ladite transaction, et
- des moyens pour recevoir dudit site central (SC) en réponse à cette demande, des données d'autorisation préalable (DA),
- après réalisation de ladite prestation,
- des moyens pour exécuter localement la transaction de règlement, à partir d'un coût effectif de ladite prestation calculé localement et des données d'autorisation préalable, et
- des moyens pour transmettre au site central des données relatives à des transactions réalisées localement.

## Patentansprüche

1. System (S) zur Durchführung einer der Bezahlung einer Dienstleistung entsprechenden Finanztransaktion in einem mobilen Standort (SM), umfassend an diesem mobilen Standort (SM):
- elektronische Zahlungsmittel (TPE), die für die Aufnahme einer Zahlungskarte (CP,CM) vorgesehen sind, und
- Mobilkommunikationsmittel (COM), die mit den elektronischen Zahlungsmitteln (TPE) verbunden sind,
**dadurch gekennzeichnet, daß** die elektronischen Zahlungsmittel (TPE) und die Mobilkommunikationsmittel (COM) zusammenwirken, um folgendes zu schaffen:
- vor und/oder während der Durchführung der Leistung
- Mittel zur Behandlung einer von einem die Leistung empfangenden Karteninhaber vorgelegten Zahlungskarte,
- Mittel zum Herstellen und zum Senden einer Zulassungsanfrage (DA) für die Durchführung der Transaktion zu einer Zentralstation (SC), und
- Mittel zum Empfangen von Vorzulassungsdaten (DA) von der Zentralstation (SC) als Antwort auf diese Anfrage,
- nach Durchführung der Leistung
- Mittel zur örtlichen Durchführung der Zahlungstransaktion ausgehend von örtlich errechneten tatsächlichen Kosten der Leistung und von den Vorzulassungsdaten, und
- Mittel zur Übertragung von örtlich durchgeführte Transaktionen betreffenden Daten zur Zentralstation.

2. System nach Anspruch 1, **dadurch gekennzeichnet, daß** die Mittel zur örtlichen Durchführung der Transaktion als Antwort auf eine örtliche Erfassung eines von dem Inhaber der Zahlungkarte eingegebenen Transaktionsbestätigungsbefehls betätigt werden.

3. System (S) nach einem der Ansprüche 1 oder 2, **dadurch gekennzeichnet, daß** die elektronischen Zahlungsmittel (TPE) und die Mobilkommunikationsmittel (COM) zusammenarbeiten, um außerdem von der Zentralstation (SC) Informationen über den Status der für diese Transaktion vorgelegten Zahlungskarte (CP,CM) zu erhalten.

4. System (S) nach Anspruch 3, **dadurch gekennzeichnet, daß** die Zulassunganfragen (DA), die Antworten (MA) und die ggf. übertragenen Informationen über den Status der Zahlungskarten (CP,CM) in der Form von SMS-Mitteilungen übertragen werden.

5. System (S) nach einem der vorhergehenden Ansprüche, das in einem Fahrzeug (SM) eingesetzt wird, **dadurch gekennzeichnet, daß** es mit einem Navigationssystem (SN) verbunden ist und mit diesem zusammenwirkt, um Informationen über die tatsächliche Position dieses Fahrzeugs (SM) zu liefern, und zwar in Verbindung mit einem besonderen Status einer für die Durchführung einer Transaktion vorgelegten Zahlungskarte (CP,CM).

6. System (S) nach Anspruch 5, **dadurch gekennzeichnet, daß** es ausgelegt ist, um als Antwort auf den Empfang einer Kartendiebstahlsmitteilung zu einer mobilen Einheit (PS), insbesondere einer Polizeistreife, eine entsprechende Alarmmitteilung (DS) und Informationen über die Position dieses Fahrzeugs (SM) zu übertragen.

7. System (S) nach einem der vorhergehenden Ansprüche, **dadurch gekennzeichnet, daß** es außerdem mit in dem mobilen Standort (SM) angeordneten Videobildaufnahmemitteln (CA) verbunden ist.

8. System (S) nach einem der vorhergehenden Ansprüche, **dadurch gekennzeichnet, daß** es außerdem mit Mitteln (VI) zum Liefern von audiovisuellen Programmen auf Anforderung verbunden ist..

9. System (S) nach einem der vorhergehenden Ansprüche, **dadurch gekennzeichnet, daß** es außerdem mit Mitteln (ED,EI) zur Identifizierung eines Inhabers einer Zahlungskarte (CP,CM) verbunden ist.

10. System nach einem der vorhergehenden Ansprüche, **dadurch gekennzeichnet, daß** es außerdem mit einem Mikrocomputer oder Mikrorechner (20) verbunden ist.

11. System (S) nach Anspruch 10, **dadurch gekennzeichnet, daß** es dafür ausgelegt ist, auf den Mikrocomputer oder Mikrorechner (20) Daten, insbesondere Buchungsdaten, die die in dem System durchgeführten Transaktionen betreffen, zu übertragen.

12. System nach einem der Ansprüche 10 oder 11, das mit einem Mikrocomputer (20) verbunden ist, der in dem beweglichen Standort (SM) eine Vielzahl von Peripherieeinrichtungen steuert, die Einrichtungen mit kostenpflichtiger Benutzung oder kostenpflichtigem Zugang (VI,MB,WB) umfassen, **dadurch gekennzeichnet, daß** es außerdem ausgebildet ist, um die Benutzung und die Abrechnung aller dieser Einrichtungen oder eines Teils davon zu verwalten.

13. System (40) zur Transaktionsverwaltung nach einem der Ansprüche 1 bis 4, das in einem für die Aufnahme von Fahrgästen bestimmten mobilen Standort, wie einem Luftfahrzeug, einem Zug oder einem Schiff, verwendet wird, **dadurch gekennzeichnet, daß** es folgendes umfaßt:
- in dem mobilen Standort:
- eine Gruppe von Terminals für den Zugang zu Diensten, die Einrichtungen zum Lesen der Zahlungskarten aufweisen und an Einrichtungen zum Liefern von Diensten angeschlossen sind,
- eine örtliche Kontroll- und Verarbeitungseinheit, an die die Zugangsterminals angeschlossen sind,
- eine örtliche Kommunikationseinheit, die mit der örtlichen Kontroll- und Verarbeitungseinheit zusammenarbeitet, um über ein oder mehrere Kommunikationsnetze mit einer oder mehreren entfernten Transaktionsverwaltungsstationen, insbesondere einer Bankstation, zu kommunizieren,
- in einer entfernten Transaktionsverwaltungsstation:
- Kommunikationsmittel zum Kommunizieren mit mobilen Standorten über ein oder mehrere Kommunikationsnetze,
- eine entfernte programmierte Kontroll- und Verarbeitungseinheit zur Verarbeitung der von einem mobilen Standort kommenden Authentifizierungs- und Transaktionszulassungsanfragen.

14. System (40) zur Transaktionsverwaltung nach Anspruch 13, **dadurch gekennzeichnet, daß** die Kommunikationen zwischen den mobilen Standorten und den entfernten Transaktionsverwaltungsstationen mit Hilfe eines Kommunikationssatellitennetzes durchgeführt werden, das eine kontinuierliche Verbindung gewährleistet, unabhängig von der relativen Position des mobilen Standorts bezüglich einer entfernten Verwaltungsstation.

15. System zur Transaktionsverwaltung nach einem der Ansprüche 13 oder 14, **dadurch gekennzeichnet, daß** die verschiedenen, in einem mobilen Standort verfügbaren Dienste an die benutzenden Fahrgäste direkt durch den Betreiber dieses mobilen Standorts verrechnet werden.

16. Verfahren zur Durchführung einer Geldtransaktion zur Berechnung einer Leistung, das in einem System (S) nach einem der vorhergehenden Ansprüche verwendet wird, umfassend die folgenden Schritte:
vor und/oder während der Durchführung dieser Leistung:
- eine Lesung von Daten, die in einem Speicher einer zur Berechnung dieser Leistung vorgelegten Zahlungskarte (CP,CM) enthalten sind,
- eine Erfassung von die Leistung betreffenden Vorinformationen,
- eine Verarbeitung der gelesenen Daten und der erfassten Leistungsinformationen zur Herstellung einer Zulassungsanfrage,
- eine Sendung dieser Zulassunganfrage (DA) von dem mobilen Standort (SM) zu einer Zentralstation (SC) nach einem mobilen Kommunikationsprotokoll (GSM),
- einen Empfang von Vorzulassungsdaten (MA), die von der Zentralstation (SC) nach diesem mobilen Kommunikationsprotokoll gesendet werden,
nach Durchführung der Leistung:
- eine örtliche Berechung des tatsächlichen Betrags der Leistung und
- eine Sendung von Transaktionsenddaten, die den tatsächlichen Betrag der Bezahlung und die Vorzulassungsdaten einschließen,
**dadurch gekennzeichnet, daß** es außerdem eine örtliche Verarbeitung eines Befehls der Bestätigung der Transaktion umfaßt, der von dem Inhaber der Zahlungskarte nach der Transaktion eingegeben wird.

17. Verfahren nach Anspruch 16, **dadurch gekennzeichnet, daß** die Vorzulassungsdaten einen Zulassungsplafond umfassen und daß der Schritt der Sendung von Transaktionsvalidierungsdaten bedingt ist durch das Ergebnis eines Schritts des Vergleichs zwischen dem tatsächlichen Betrag der Zahlung kleiner als der Zulassungplafond oder gleich diesem ist.

18. Verfahren nach einem der Ansprüche 16 oder 17, **dadurch gekennzeichnet, daß** es außerdem eine örtliche Kontrolle der Identifizierung des Inhabers der Zahlungskarte (CP,CM) vor der Sendung der Zulassungsanfrage umfasst.

19. Verfahren nach einem der Ansprüche 16 bis 18, **dadurch gekennzeichnet, daß** es außerdem einen Schritt des Empfangs von Informationen über den Status der für die Bezahlung der Transaktion vorgelegten Zahlungskarte (CP,CM) bei dem mobilen Standort (SM) umfaßt.

20. Verfahren nach Anspruch 19, **dadurch gekennzeichnet, daß** es außerdem einen Schritt des Empfangs von Informationen über die tatsächliche Position des mobilen Standorts (SM) und einen Schritt der kombinierten Übertragung einer Warnmitteilung (DS) in Zusammenhang mit einem besonderen Status einer Zahlungskarte (CP,CM) und der Informationen über die Position des mobilen Standorts umfasst.

21. Verfahren nach einem der Ansprüche 16 bis 20, umfassend:
- in dem mobilen Standort:
- Sequenzen des Sammelns von Transaktionszulassungsanfragen, die sich aus der Vorlage von Zahlungskarten ergeben,
- Sequenzen der Übertragung der gesammelten Zulassungsanfragen zu einer entfernten Transaktionsverwaltungsstation über ein oder mehrere Kommunikationsnetze,
- bei der entfernten Transaktionsstation:
- Empfang und Verarbeitung von von verschiedenen mobilen Standorten kommenden Transaktionszulassungsanfragen,
- Herstellung von Transaktionszulassungsdaten und Übertragung dieser Daten zu den betreffenden mobilen Standorten, um dort verarbeitet zu werden.

22. Verfahren nach Anspruch 21, **dadurch gekennzeichnet, daß** die von einem mobilen Standort auf die Übertragung einer Zulassungsanfrage hin erhaltenen Transaktionszulassungsdaten eine Zulassung des Eingehens von Kosten bis zu einem vorbestimmten Plafond und Authentifizierungsdaten umfassen.

23. Verfahren nach einem der Ansprüche 21 oder 22, **dadurch gekennzeichnet, daß** die Übertragungen von Zulassungsanfragen von einem mobilen Standort örtlich zusammengefaßt werden, bevor sie in Form von Paketen durchgeführt werden.

24. Verfahren nach Anspruch 23, **dadurch gekennzeichnet, daß** es außerdem eine Verwaltung einer optimalen Wegwahl für die für entfernte Transaktionsverwaltungsstationen bestimmten Datenpakete umfaßt.

25. Verfahren nach Anspruch 24, **dadurch gekennzeichnet, daß** die Wegwahlverwaltung örtlich in dem mobilen Standort vorgenommen wird.

26. Verfahren nach einem der Ansprüche 24 oder 25, **dadurch gekennzeichnet, daß** die Wegwahlverwaltung von einer Wegwahlstation aus vorgenommen wird, die mit einer entfernten Transaktionsverwaltungsstation verbunden ist.

27. Mobile Einrichtung zur Transaktionsverwaltung bei einem mobilen Standort für die Verwendung des Transaktionsverwaltungssystems nach einem der Ansprüche 1 bis 15, umfassend elektronische Zahlungsmittel (TPE), die für die Aufnahme einer Zahlungskarte (CP,CM) vorgesehen sind, und Mobilkommunikationsmittel (COM), die mit den elektronischen Zahlungsmitteln (TPE) verbunden sind, **dadurch gekennzeichnet, daß** die elektronischen Zahlungsmittel (TPE) und die Mobilkommunikationsmittel (COM) zusammenwirken, um folgendes zu schaffen:
- vor und/oder während der Durchführung der Leistung:
- Mittel zur Behandlung einer Zahlungskarte, die von einem die Leistung empfangenden Karteninhaber vorgelegt wird,
- Mittel zur Herstellung einer Zulassungsanfrage (DA) für die Durchführung der Transaktion und zu ihrer Sendung zu einer Zentralstation (SC) und
- Mittel zum Empfang von Vorzulassungsdaten (DA) von der Zentralstation (SC) als Antwort auf diese Anfrage,
- nach der Durchführung der Leistung:
- Mittel zur örtlichen Durchführung der Zahlungstransaktion ausgehend von örtlich errechneten tatsächlichen Kosten der Leistung und von den Vorzulassungsdaten und
- Mittel zum Übertragen von örtlich durchgeführte Transaktionen betreffenden Daten zu der Zentralstation.

## Claims

1. System (S) for carrying out in a mobile site (SM) a financial transaction corresponding to payment for a provision of service, comprising in the said mobile site (SM):
- electronic payment means (TPE) provided for receiving a charge card (CP, CM), and
- mobile communication means (COM) connected to the said electronic payment means (TPE),
**characterised in that** the electronic payment means (TPE) and the mobile communication means (COM) cooperate in order to procure:
- before and/or during the carrying out of the said service:
- means of processing a charge card presented by a card-holder who is a client of the service,
- means of generating and of transmitting to a central site (SC) a request for authorisation (DA) to carry out the said transaction, and
- means of receiving prior authorisation data (DA) from the said central site (SC) in response to this request,
- after carrying out the said service:
- means of executing the payment transaction locally, on the basis of a real cost of the said service calculated locally and prior authorisation data, and
- means of transmitting data relating to the transactions carried out locally to the central site.

2. System according to Claim 1, **characterised in that** the means for executing the transaction locally are commanded in response to a local acquisition of a transaction confirmation instruction given by the holder of the charge card.

3. System (S) according to one of Claims 1 or 2, **characterised in that** the electronic payment means (TPE) and the mobile communication means (COM) cooperate in order to furthermore receive from the central site (SC) information relating to the status of the charge card (CP, CM) offered for this transaction.

4. System (S) according to Claim 3, **characterised in that** the authorisation requests (DA), the responses (MA) and the optional information relating to the status of the charge cards (CP, CM) are transmitted in the form of SMS messages.

5. System (S) according to any one of the preceding claims, used in a vehicle (SM), **characterised in that** it is connected to a navigation system (SN) and cooperates with the said navigation system (SN) in order to provide information related to the true position of the said vehicle (SM), in relationship with a particular status of a charge card (CP, CM) offered in payment for a transaction.

6. System (S) according to Claim 5, **characterised in that** it is designed to transmit, in response to the reception of stolen card information, an appropriate alarm message (DS) and information related to the position of the vehicle (SM) to a mobile entity (PS), in particular to a police patrol.

7. System (S) according to any one of the preceding claims, **characterised in that** it is furthermore connected to means (CA) of taking video images disposed inside the mobile site (SM).

8. System (S) according to any one of the preceding claims, **characterised in that** it is furthermore connected to means (VI) of providing audio-visual programmes on request.

9. System (S) according to any one of the preceding claims, **characterised in that** it is furthermore connected to means (ED, EI) of identifying a holder of a charge card (CP, CM).

10. System (S) according to any one of the preceding claims, **characterised in that** it is furthermore connected to a microcomputer or micro-calculator (20).

11. System (S) according to Claim 10, **characterised in that** it is furthermore designed to transmit data to the microcomputer or micro-calculator (20), in particular accounting data related to the transactions carried out within the said system.

12. System (S) according to one of Claims 10 or 11, connected to a microcomputer (20) controlling within the mobile site (SM) a plurality of peripheral equipments comprising equipments with paid utilisation or access (VI, MB, WB), **characterised in that** it is furthermore designed to manage the utilisation and invoicing of all or some of the said equipments.

13. Transaction management system (40) according to any one of Claims 1 to 4, used in a mobile site provided for receiving passengers, such as an aircraft, a train or a ship, **characterised in that** it comprises:
- within the mobile site:
- a set of terminals providing access to services, comprising charge card reading equipment and being connected to equipment for providing services,
- a local checking and processing unit to which the access terminals are connected,
- a local communication unit cooperating with the local checking and processing unit in order to communicate, via one of more communication networks, with one or more remote transaction management sites, in particular a bank site,
- within a remote transaction management site:
- communication means for communication with mobile sites via one or more communication networks,
- a remote checking and processing unit programmed for processing authentication and transaction authorisation requests coming from a mobile site.

14. Transaction management system (40) according to Claim 13, **characterised in that** the communications between the mobile sites and the remote transaction management sites are carried out by means of a satellite communication network procuring a continuity of connection whatever the relative position of the mobile site may be with respect to the remote management site.

15. Transaction management site according to one of Claims 13 or 14, **characterised in that** the various services available in a mobile site are invoiced to the passengers directly by the operator of that mobile site.

16. Method for carrying out a financial transaction in payment for a service provision, implemented in a system (S) according to any one of the preceding claims, comprising the following steps:
before and/or during the execution of the said service,
- a reading of data contained in a memory of a charge card (CP, CM) offered in payment for this service.
- an acquisition of prior information related to the said service,
- a processing of the data read and of the service information acquired in order to generate an authorisation request,
- a transmission of this authorisation request (DA) from the mobile site (SM) to a central site (SC), according to a mobile communication protocol (GSM),
- a reception of prior authorisation data (MA) transmitted from the central site (SC) according to the said mobile communication protocol,
after execution of the said service,
- a local computation of the real cost of payment for the said service, and
- a transmission of final transaction data including the real cost of payment and the provisional authorisation data,
**characterised in that** it furthermore comprises local processing of an instruction confirming the transaction given by the holder of the charge card at the end of the transaction.

17. Method according to one of Claims 16, **characterised in that** the provisional authorisation data comprises an authorisation ceiling, and **in that** the step of transmission of transaction validation data is dependent on the result of a step of comparison being that the actual amount of the payment is less than or equal to the said authorisation ceiling.

18. Method according to one of Claims 16 or 17, **characterised in that** it furthermore comprises a local identification check of the holder of the charge card (CP, CM), prior to the transmission of the authorisation request.

19. Method according to one of Claims 16 to 18, **characterised in that** it furthermore comprises a step of receiving, at the mobile site (SM), information related to the status of the charge card (CP, CM) offered in payment for the transaction.

20. Method according to Claim 19, **characterised in that** it furthermore comprises a step of receiving information related to the actual position of the mobile site (SM) and a step of the combined transmission of an alarm message (DS) in relation with a particular status of a charge card (CP, CM) and of the said positional information of the mobile site.

21. Method according to any one of Claims 16 to 20, comprising:
- within the mobile site:
- sequences of collecting transaction authorisation requests resulting from the presentation of charge cards,
- sequences of transmission of the collected authorisation requests to a remote transaction management site, via one or more communications networks,
- at the remote transaction management site:
- a reception and a processing of transaction authorisation requests coming from various mobile sites,
- a generation of transaction authorisation data, and a transmission of this data to the mobile sites concerned in order to be processed there.

22. Method according to Claim 21, **characterised in that** the transaction authorisation data received by a mobile site following the transmission of an authorisation requests include an authorisation to accept expenditure up to a predetermined ceiling and authentication data.

23. Method according to one of Claims 21 or 22, **characterised in that** transmissions of authorisation requests from a mobile site are grouped locally before being carried out in the form of packets.

24. Method according to Claim 23, **characterised in that** it furthermore comprises an optimum routing management of the data packets to remote transaction management sites.

25. Method according to Claim 24, **characterised in that** the routing management is carried out locally within the mobile site.

26. Method according to one of Claims 24 or 25, **characterised in that** the routing management is carried out from a routing site connected to a remote transaction management site.

27. Mobile transaction management equipment in a mobile site for the implementation of the transaction management system according to any one of Claims 1 to 15, comprising electronic payment means (TPE) designed to receive a charge card (CP, CM), and mobile communication means (COM) connected to the said electronic payment means (TPE),
**characterised in that** the electronic payment means (TPE) and the mobile communication means (COM) cooperate in order to provide:
- before and/or during the carrying out of the said service,
- means for processing a charge card presented by a holder who is a client of the service,
- means for generating and transmitting to a central site (SC) a request for authorisation (DA) to carry out the said transaction, and
- means for receiving from the said central site (SC), in response to this request, prior authorisation data (DA),
- after carrying out the said service,
- means for executing locally the payment transaction, on the basis of a locally calculated real cost of the said service and prior authorisation data, and
- means for transmitting to the central site data related to the transactions carried out locally.
